# EUROPEAN PATENT SPECIFICATION

(11) **EP 3 395 166 B1**
(45) Date of publication and mention of the grant of the patent: **11.10.2023**
(21) Application number: 18168636.1
(22) Date of filing: 20.04.2018
(51) Int. Cl.: A01K 1/00, B01D 53/74, F24F 12/00, B01D 21/24, F24F 7/06, F24F 11/00, B01D 21/00

(54) **AIR TREATMENT UNIT, AS WELL AS A METHOD FOR BREEDING ANIMALS IN A CATTLE SHED**
LUFTBEHANDLUNGSEINHEIT SOWIE VERFAHREN ZUM ZÜCHTEN VON TIEREN IN EINEM VIEHSTALL
UNITÉ DE TRAITEMENT DE L'AIR, AINSI QU'UN PROCÉDÉ POUR L'ÉLEVAGE D'ANIMAUX DANS UN ABRI POUR BÉTAIL

(30) Priority: 26.04.2017 NL 2018784; 23.11.2017 NL 2019965
(43) Date of publication of application: 31.10.2018
(73) Proprietor: Van de Ven Beheer B.V., 5521 DZ Eersel (NL)
(72) Inventor: Van Wagenberg, Antonius Victor, 5551 AB Valkenswaard (NL)
(74) Representative: Verhees, Godefridus Josephus Maria

(56) References cited:
- WO-A2-2009/030977
- DE-A1- 3 330 087
- DE-U1-202006 017 693
- FR-A1- 2 338 460
- GB-A- 2 281 703
- US-A- 4 144 173
- US-A- 5 108 469

## Description

### Technical field of the invention

The invention relates to a method for discharging a contaminated layer floating on liquid into a liquid reservoir of an air treatment unit for use in a cattle shed, comprising:
- a housing provided with:
   - a stale air inlet opening for the admission of stale air (air dwelling in the shed),
   - a stale air outlet opening for discharging stale air to the environment outside the cattle shed,
   - a stale air duct extending in the housing between the stale air inlet opening and the stale air outlet opening, and
   - a plurality of openings in one or more walls of the housing,
- a plurality of air ducts extending in the stale air duct and having open ends connected to the openings, of which air ducts one end forms an outside air inlet opening and ends up in the environment outside the cattle shed and the other end forms an outside air outlet opening and ends up in the cattle shed,
- first ventilation means for sucking in or blowing outside air via the air ducts into the cattle shed,
- second ventilation means for sucking in or blowing the stale air via the stale air duct into the environment outside the cattle shed,
- spraying means for spraying and / or atomizing liquid onto and between the air ducts, which spraying means comprise first spraying means which are present in the housing above the air ducts for spraying liquid onto and against the air ducts for the purpose of cleaning and / or cooling down the air ducts, which first spraying means comprise a first liquid pump and a plurality of spray nozzles, the first liquid pump pumping the liquid from the liquid reservoir to the spray nozzles, and
- a receptacle which is present underneath the air ducts for receiving liquid.

### Prior art

An air treatment unit of the type used in the above method is known from US 5 108 469 A. This known air treatment unit comprises a housing provided with stale air inlet and outlet openings, a stale air duct extending in the housing between the stale air inlet opening and the stale air outlet opening, and a plurality of openings in one or more walls of the housing. The known air treatment unit further comprises a plurality of air ducts extending in the stale air duct and having open ends connected to the openings, first ventilation means for sucking in or blowing outside air via the air ducts into the cattle shed, second ventilation means for sucking in or blowing the stale air via the stale air duct into the environment outside the cattle shed, spraying means for spraying and / or atomizing liquid onto and between the air ducts, which spraying means comprise first spraying means which are present in the housing above the air ducts for spraying liquid onto and against the air ducts for the purpose of cleaning and / or cooling down the air ducts, which first spraying means comprise a first liquid pump for the supply of liquid, and a receptacle which is present underneath the air ducts for receiving liquid..

In WO 2009 / 030977 A2 a device and method is disclosed for separating oil contaminant and water by reducing the flow rate of a pump that pumps cleaned water out of a vessel, causing the liquid level to raise such that the floating oil contaminant can skimmed off. In this known device the inlet flow rate of contaminated water remains constant during the skimming operation.

### Summary of the invention

An object of the invention is to provide an affordable (thus relatively inexpensive) possibility for removing and discharging contaminants floating on liquid in the reservoir of a device as described in the preamble of claim 1.

To this end the method according to the invention is characterized in that the receptacle is provided with a bottom which is sloping down to the stale air inlet opening, the liquid reservoir is provided on the stale air inlet side of the air treatment unit and the receptacle is connected with its sloping end to the liquid reservoir where a side wall of the liquid reservoir located opposite to the receptacle is lower than the remaining side walls and forms an overflow over which a layer of dust floating on the collected liquid flows into a collecting trough located next to the overflow and is discharged via an outlet pipe connected to the collecting trough, and in that during the operation of the first spraying means, the first liquid pump, which pumps the liquid out of the liquid reservoir, is periodically briefly switched off, so that due to the bottom that is sloping down to the stale air inlet opening an extra quantity of liquid briefly flows over the overflow and thereby takes along a floating contaminated layer. During the operation of the first liquid pump, the second liquid pump is preferably switched off. By switching off the first liquid pump, for example for 3 seconds, the liquid present in the liquid circuit flows into the liquid reservoir without a similar amount of liquid being pumped out of the liquid reservoir at the same time, as would be the case if a first liquid pump were operated. This liquid flow takes along the whole or substantially whole floating contaminated layer (dust layer) to the overflow and together with the dust layer flows into the collecting trough. Thus, without additional means and by utilizing the already present components (first liquid pump), the contaminants can be removed from the liquid and discharged.

### Brief description of the drawings

The invention will be further elucidated below with reference to an example of embodiment of the method according to the present invention represented in the drawings, in which:
Fig. 1 shows an air treatment unit in longitudinal section; and
Fig. 2 shows the air treatment unit in top view with open top.

### Detailed description of the drawings

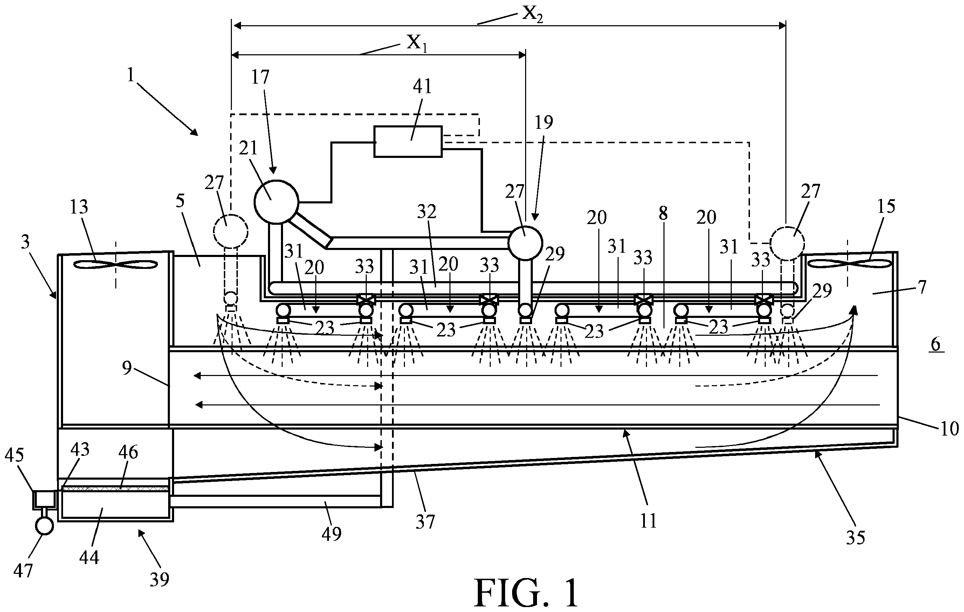

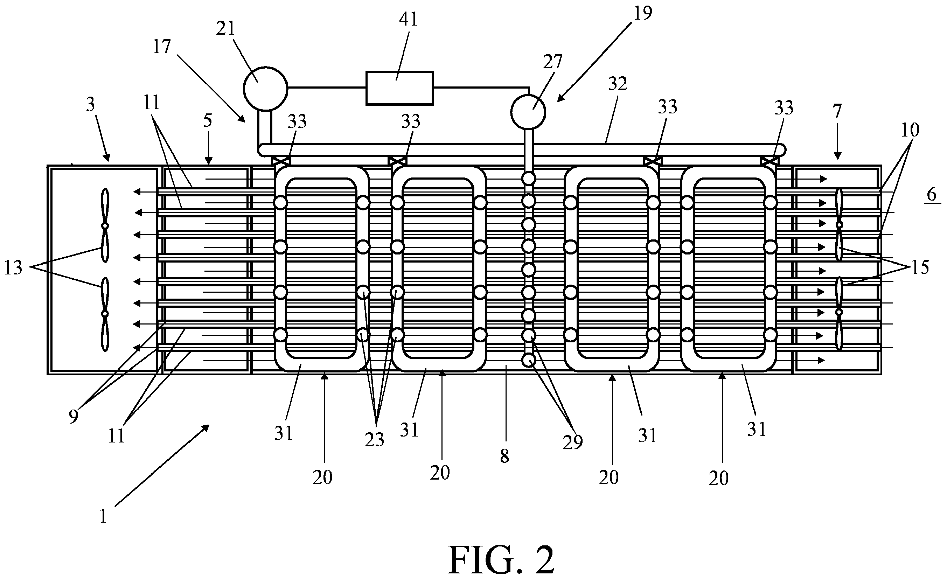

In Figs. 1 and 2 is shown in longitudinal section and in top view respectively an air treatment unit used in the method according to the invention. The air treatment unit 1 has a housing 3 which is provided with a stale air inlet opening 5 for the admission of stale air and a stale air outlet opening 7 for transporting stale air to the environment 6 outside the cattle shed. A stale air duct 8 extends in the housing between the stale air inlet opening and the stale air outlet opening.

Furthermore, the housing is provided with a plurality of openings in two walls of the housing facing each other. The openings 10 in one of these walls which are connected to the environment 6 form inlet openings for the admission of outside air and openings 9 in the other wall which are connected to the inner space of the cattle shed, form the outlet openings for transporting the outside air to the cattle shed. The housing accommodates a plurality of air ducts 11 which are open at the ends and extend in the stale air duct. These air ducts are connected with the open ends to the openings 9 and 10 and form air ducts through which the fresh outside air flows into the cattle shed.

Depending on the exchange of energy and / or degree of cleaning of the stale air, the duct length of the unit described above is variable. In this way, an optimal duct length can be determined for each climate condition and type of cattle, in which exchange of energy, air washing, energy consumption (longer ducts will create more pressure drop and thus absorb energy), are the parameters that influence this duct length. An additional function of the ducts is to capture the water droplets that are brought into the air by spraying / atomizing operations. As a result, no drip traps are required to prevent the water droplets from entering the exhaust fans of the air treatment unit.

The air treatment unit further has first ventilation means 13 for drawing fresh outside air via the air ducts into the cattle shed and second ventilation means 15 for drawing stale air via the stale air duct from the shed to the environment 6. Furthermore, in the stale air duct 8 in the housing are accommodated 3 spraying means 17 and atomizing means 19 for spraying or atomizing respectively liquid on the ducts and into the stale air duct. The spraying means 17 are located in the housing 3 above the air ducts 11 and serve to cool the air ducts 11 in summer for regulating the temperature in the cattle shed and furthermore for cleaning the ducts on the outside from pollution caused by the stale air flowing past them. The atomizing means 19 are used for purifying the stale air flowing through the stale air duct to the environment 6.

The spraying means 17 have a first liquid pump 21 for supplying spray liquid to a plurality of spray nozzles 23 connected to the first liquid pump. The atomizing means 19 have a second liquid pump 27 for supplying atomizing liquid to a plurality of atomizing heads 29 connected to the second liquid pump. This second liquid pump 27 has a lower pump capacity than the first liquid pump 21 and is only operated in the periods of time when the first liquid pump is turned off. The two liquid pumps suck in the liquid via a liquid line 49 connected to a liquid reservoir 39.

The ventilation means and spraying means and atomizing means are controlled by a computer system 41 which is provided with control means which cool the incoming outside air on the basis of the current and desired temperature in the cattle shed, by suitably controlling the first liquid pump. The computer system 41 is furthermore provided with further control means which control the second liquid pump 27 on the basis of current and desired purity of the outgoing stale air to the environment outside the cattle shed.

The spraying means 17 comprise a plurality of separate spray circuits 20 which, viewed in the longitudinal direction of the air ducts, are spaced one behind the other and can be controlled separately. Each spray circuit 20 has a liquid line 31 to which a plurality of the spray nozzles 23 are connected and is connected via a valve 33 to a main line 32 to which the first liquid pump 21 is connected. The control means control not only the first liquid pump 21 but also the valves 33 so as to better control the temperature of the incoming outside air and effectively clean by means of excessive rinsing the regions that are controlled.

Underneath the air ducts 11 is located a receptacle 35, see Fig. 2, for receiving spray liquid and atomizing liquid. The receptacle is provided with a bottom 37 which slopes down to the stale air inlet opening 5 and connects to the liquid reservoir 39 for temporarily storing received spray liquid. This liquid reservoir is also present on the stale air inlet side of the air treatment unit. A side wall of the liquid reservoir 39 opposite the receptacle 35 is lower than the remaining side walls and forms an overflow 43 over which a layer 46 floating on the received liquid 44 and formed by dust particles captured from the air, flows into a collecting trough 45 next to the overflow. This layer of dust is discharged via an outlet pipe 47 connected to the collecting trough.

Air washers in poultry farming are very expensive because of the high ventilation capacity per animal and, apart from the cleaning effect, do not provide a climate or energy benefit in the cattle shed. The emissions of particulate matter and effects on public health force the sector into affordable developments for far-reaching emission reduction. An important payback component of the air treatment unit according to the invention is the improvement of the result in the cattle shed. In the air treatment unit, water is sprayed into the outgoing stale air. This water provides the cooling effect because it cools down to the wet-bulb temperature of the outgoing air. At the same time, odor, particulate matter and ammonia dissolve in this water. These substances are filtered out of the water in an external water treatment (known technology).

This air washing technology is activated in the second half of the round (with broilers), i.e. the first weeks (with young chicks, high temperature, little ventilation and little emission) the air treatment unit works simply as an air treatment unit, not until 2 to 3 weeks later will also the air washing function be started. The choice to either or not activate / deactivate the airwashing function is made by the computer system based on the energy balance of the shed and measured indoor climate parameters. Air-washing (particulate matter, ammonia, odor, etc.) can be controlled based on the air quality of the discharged stale air. In the first phase the air washing function can also be used as a cleaning function for the air ducts.

Near the stale air inlet opening of the air treatment unit preferably the first atomizing means are installed, so that adiabatic cooling takes place immediately upon entry. Preferably, depending on the efficiency of the cooling, various atomizing means are placed above the ducts which means are arranged at different distances X₁ and X₂ (see Fig. 1) relative to the first atomizing means. The maximum efficiency is achieved by optimally selecting the plurality of atomizing means and the distances Xᵢ and is dependent on, inter alia, air velocities and applied temperatures.

If necessary, the liquid can be acidified in order to capture ammonia better or a different form of liquid treatment can take place to influence which substances do or do not dissolve in the liquid. Furthermore, the liquid that is sprayed during cleaning / cooling can be filtered, so that it can be reused and therefore does not have to be disposed of.

For disposing of the dust layer floating on the liquid in the liquid reservoir, during operation the first liquid pump 21 pumping the liquid from the liquid reservoir to the spray nozzles 23, is switched off periodically. As a result, an extra quantity of liquid briefly flows over the overflow 43 into the collecting trough and thereby takes along the dust layer 46 floating on the liquid.

## Claims

1. A method for discharging a contaminated layer floating on the liquid into the liquid reservoir (39) of an air treatment unit for use in a cattle shed, comprising:
- a housing (3) provided with:
- a stale air inlet opening (5) for the admission of stale air (air dwelling in the shed),
- a stale air outlet opening (7) for discharging stale air to the environment (6) outside the cattle shed,
- a stale air duct (8) extending in the housing between the stale air inlet opening and the stale air outlet opening, and
- a plurality of openings (9, 10) in one or more walls of the housing,
- a plurality of air ducts (11) extending in the stale air duct and having open ends connected to the openings, of which air ducts one end forms an outside air inlet opening and ends up in the environment outside the cattle shed and the other end forms an outside air outlet opening and ends up in the cattle shed,
- first ventilation means (13) for sucking in or blowing outside air via the air ducts into the cattle shed,
- second ventilation means (15) for sucking in or blowing the stale air via the stale air duct into the environment outside the cattle shed,
- spraying means (17, 19) for spraying and / or atomizing liquid onto and between the air ducts (11), which spraying means (17, 19) comprise first spraying means (17) which are present in the housing (3) above the air ducts (11) for spraying liquid onto and against the air ducts for the purpose of cleaning and / or cooling down the air ducts, which first spraying means (17) comprise a first liquid pump (21) and a plurality of spray nozzles (23), the first liquid pump pumping the liquid from the liquid reservoir to the spray nozzles (23), and
- a receptacle (35) which is present underneath the air ducts (11) for receiving liquid,
**characterized in that** the receptacle is provided with a bottom (37) which is sloping down to the stale air inlet opening (5), the liquid reservoir (39) is provided on the stale air inlet side of the air treatment unit and the receptacle (35) is connected with its sloping end to the liquid reservoir where a side wall of the liquid reservoir (39) located opposite to the receptacle (35) is lower than the remaining side walls and forms an overflow (43) over which a layer of dust (46) floating on the collected liquid (44) flows into a collecting trough (45) located next to the overflow and is discharged via an outlet pipe (47) connected to the collecting trough,
and **in that** during the operation of the first spraying means (17) the first liquid pump, which pumps the liquid out of the liquid reservoir, is periodically briefly switched off, so that an extra quantity of liquid briefly flows over the overflow (43) and thereby carries along the floating contaminated layer (46).

## Patentansprüche

1. Verfahren zum Ableiten einer kontaminierten Schicht, die auf der Flüssigkeit schwimmt, in den Flüssigkeitsreservoir (39) einer Luftaufbereitungseinheit zur Verwendung in einem Viehstall, umfassend:
- ein Gehäuse (3) versehen mit:
- eine Verbrauchslufteinlassöffnung (5) zum Einlass von verbrauchter Luft (Wohnluft im Stall),
- eine Verbrauchsluftaustrittsöffnung (7) zum Abführen verbrauchter Luft an die Umgebung (6) außerhalb des Viehstalls,
- einen im Gehäuse zwischen der Verbrauchslufteinlassöffnung und der Verbrauchsluftaustrittsöffnung verlaufenden Verbrauchsluftkanal (8) und
- eine Vielzahl von Öffnungen (9, 10) in einer oder mehreren Wänden des Gehäuses,
- eine Vielzahl von Luftkanälen (11), die sich in dem Verbrauchsluftkanal erstrecken und offene Enden haben, die mit den Öffnungen verbunden sind, wobei ein Ende der Luftkanäle eine Außenlufteinlassöffnung bildet und in der Umgebung außerhalb des Viehstalls endet und das andere Ende eine Außenluftaustrittsöffnung bildet und in den Viehstall gelangt,
- erste Belüftungsmittel (13) zum Ansaugen oder Einblasen von Außenluft über die Luftkanäle in den Viehstall,
- zweite Belüftungsmittel (15) zum Ansaugen oder Ausblasen der verbrauchten Luft über den Verbrauchsluftkanal in die Umgebung außerhalb des Viehstalls,
- Sprühmittel (17, 19) zum Sprühen und/oder Zerstäuben von Flüssigkeit auf und zwischen den Luftkanälen (11), wobei die Sprühmittel (17, 19) erste Sprühmittel (17) umfassen, die oben im Gehäuse (3) vorhanden sind oberhalb der Luftkanäle (11) zum Sprühen von Flüssigkeit auf und gegen die Luftkanäle zum Zwecke der Reinigung und/oder Abkühlung der Luftkanäle, wobei die ersten Sprühmittel (17) eine erste Flüssigkeitspumpe (21) und mehrere Sprühdüsen (23) umfassen, wobei die erste Flüssigkeitspumpe die Flüssigkeit aus dem Flüssigkeitsreservoir zu den Sprühdüsen (23) pumpt, und
- einen unterhalb der Luftkanäle (11) vorhandenen Behälter (35) zur Aufnahme von Flüssigkeit,
**dadurch gekennzeichnet, dass** der Behälter mit einem zur Verbrauchslufteinlassöffnung (5) hin abfallenden Boden (37) versehen ist, das Flüssigkeitsreservoir (39) an der Seite der Verbrauchslufteinlassöffnung des Luftaufbereitungseinheit vorgesehen ist und der Behälter ( 35) mit seinem schrägen Ende mit dem Flüssigkeitsbehälter verbunden ist, wobei eine dem Behälter (35) gegenüberliegende Seitenwand des Flüssigkeitsreservoir (39) niedriger als die übrigen Seitenwände ist und einen Überlauf (43) bildet, über den eine auf der gesammelten Flüssigkeit (44) schwimmender Schicht aus Staub (46) in eine neben dem Überlauf befindliche Auffangwanne (45) fließt und über ein mit der Auffangwanne verbundenes Auslassrohr (47) abgeführt wird,
und dass während des Betriebs der ersten Sprüheinrichtung (17) die erste Flüssigkeitspumpe, die die Flüssigkeit aus dem Flüssigkeitsreservoir pumpt, periodisch kurzzeitig ausgeschaltet wird, so dass kurzzeitig eine zusätzliche Flüssigkeitsmenge über den Überlauf (43) fließt und dabei die schwimmende Schmutzschicht (46) mit reißt.

## Revendications

1. Procédé pour évacuer une couche contaminée flottant sur le liquide dans le réservoir de liquide (39) d'une unité de traitement d'air destinée à être utilisée dans une étable, comprenant :
- un boîtier (3) pourvu de :
- une ouverture d'entrée d'air vicié (5) pour l'admission d'air vicié (air demeurant dans la étable),
- une ouverture de sortie d'air vicié (7) pour évacuer l'air vicié vers l'environnement (6) extérieur à l'étable,
- un conduit d'air vicié (8) s'étendant dans le boîtier entre l'ouverture d'entrée d'air vicié et l'ouverture de sortie d'air vicié, et
- une pluralité d'ouvertures (9, 10) dans une ou plusieurs parois du boîtier,
- une pluralité de conduits d'air (11) s'étendant dans le conduit d'air vicié et ayant des extrémités ouvertes reliées aux ouvertures, dont une extrémité forme une ouverture d'entrée d'air extérieur et aboutit dans l'environnement extérieur à l'étable et l'autre extrémité forme une ouverture de sortie d'air extérieur et aboutit dans l'étable,
- des premiers moyens de ventilation (13) pour aspirer ou insuffler de l'air extérieur via les conduits d'air dans l'étable,
- des seconds moyens de ventilation (15) pour aspirer ou souffler l'air vicié via le conduit d'air vicié dans l'environnement extérieur à l'étable,
- des moyens de pulvérisation (17, 19) pour pulvériser et/ou atomiser du liquide sur et entre les conduits d'air (11), lesquels moyens de pulvérisation (17, 19) comprennent des premiers moyens de pulvérisation (17) qui sont présents dans le boîtier (3) au-dessus les conduits d'air (11) pour pulvériser du liquide sur et contre les conduits d'air dans le but de nettoyer et/ou de refroidir les conduits d'air, lesquels premiers moyens de pulvérisation (17) comprennent une première pompe à liquide (21) et une pluralité de buses de pulvérisation (23), la première pompe à liquide pompant le liquide du réservoir de liquide vers les buses de pulvérisation (23), et
- un récipient (35) présent sous les conduits d'air (11) pour recevoir du liquide,
**caractérisé en ce que** le récipient est pourvu d'un fond (37) qui est incliné vers l'ouverture d'entrée d'air vicié (5), le réservoir de liquide (39) est prévu du côté d'entrée d'air vicié de l'unité de traitement d'air et le récipient (35) est relié par son extrémité inclinée au réservoir de liquide où une paroi latérale du réservoir de liquide (39) située à l'opposé du récipient (35) est plus basse que les parois latérales restantes et forme un trop-plein (43) sur lequel une couche de la poussière (46) flottant sur le liquide collecté (44) s'écoule dans une auge collectrice (45) située à côté du trop-plein et est évacuée via un tuyau de sortie (47) relié à l'auge collectrice,
et **en ce que** pendant le fonctionnement du premier moyen de pulvérisation (17), la première pompe à liquide, qui pompe le liquide hors du réservoir de liquide, est périodiquement arrêtée brièvement, de sorte qu'une quantité supplémentaire de liquide s'écoule brièvement sur le trop-plein (43) et entraîne ainsi la couche contaminée flottante (46).
